# DEMANDE DE BREVET EUROPEEN

(11) **EP 0 687 615 A1**
(43) Date de publication de la demande: **20.12.1995**
(21) Numéro de dépôt: 95420147.1
(22) Date de dépôt: 08.06.1995
(51) Int. Cl.: B62B 5/04, A61G 5/10, B60T 1/04

(54) **Frein d'immobilisation pour véhicules munis de roues à pneus souples, notamment pour fauteuils roulants pour handicapés**

(30) Priorité: 16.06.1994 FR 9407605
(71) Demandeur: Lauzier, René, F-38300 Bourgoin-Jallieu (FR)
(72) Inventeur: Lauzier, René, F-38300 Bourgoin-Jallieu (FR)
(74) Mandataire: Bratel, Gérard

(57) **Abrégé**

Le frein comporte un patin (9a) avec partie active (10a), déplaçable entre une position enfoncée radialement dans le pneu souple (2) d'une roue (1) du type roue de bicyclette, et une position éloignée du pneu (2). Le patin (9a) est monté pivotant et coulissant, relativement à un corps fixe (3a), par un premier axe (7a) coopérant avec un moyen de guidage linéaire (12a). Un levier de commande (12a), monté pivotant sur le corps (3a) autour d'un second axe (8a) fixe, forme une poignée de manoeuvre (17a) et est articulé, autour d'un axe mobile (18a), à une partie du patin (9a) éloignée de sa partie active (10a). Le mouvement de commande comporte le franchissement d'un "point mort" correspondant à l'alignement des trois axes (7a,8a,18a). Au moins dans la position serrée du frein, le premier axe (7a) passe par la surface de contact de la partie active (10a) du patin avec le pneu (2).

## Description

La présente invention concerne un frein d'immobilisation pour véhicules munis de roues à pneus souples, du type roue de bicyclette, ou motocycle, et notamment mais non exclusivement un frein d'immobilisation destiné aux fauteuils roulants pour handicapés.

Les véhicules de ce genre sont équipés soit de freins de haute qualité, soit de freins bon marché.

Les freins de haute qualité sont faciles à utiliser, ergonomiques et efficaces, ces qualités étant importantes car la main d'un handicapé n'a pas toujours la force d'appuyer fortement sur un levier de commande de frein, et l'efficacité entraîne la sécurité. Ces freins possèdent en outre un mécanisme entièrement protégé des intempéries. Toutefois, ils sont chers et participent pour une forte part au prix d'un fauteuil roulant. Les freins bon marché sont par contre peu efficaces ou difficiles à manoeuvrer notamment par une personne handicapée, et ils résistent mal à des sollicitations répétées.

La présente invention a pour but de fournir un frein d'immobilisation possédant les qualités des deux catégories de freins précédemment évoquées, sans comporter leurs inconvénients, c'est-à-dire un frein facile à utiliser, efficace, résistant et peu onéreux à fabriquer.

A cet effet, dans le frein d'immobilisation selon l'invention, du genre comportant un patin avec partie active déplaçable entre une position enfoncée radialement dans le pneu et une position éloignée du pneu, sous l'action d'un organe de commande, le patin est monté pivotant et coulissant relativement à un corps fixe, par un premier axe coopérant avec un moyen de guidage linéaire, tandis que l'organe de commande est conformé en levier de commande, monté pivotant sur le corps fixe autour d'un second axe fixe et parallèle au premier axe, levier dont un premier bras forme une poignée de manoeuvre et dont un deuxième bras est articulé, autour d'un axe mobile, à une partie du patin éloignée de sa partie active, le mouvement de commande comportant le franchissement d'un "point mort" correspondant à l'alignement des trois axes, tandis qu'au moins dans la position serrée du frein, le premier axe, suivant lequel le patin est monté pivotant et coulissant, passe sensiblement par la surface de contact de la partie active du patin avec le pneu.

Selon une première forme de réalisation de l'invention, le premier axe précité est un axe fixe, solidaire du corps du frein, et le patin possède une partie de guidage allongée, dans laquelle est ménagée une lumière ou rainure de guidage longitudinale dans laquelle est engagé de façon pivotante et coulissante l'axe fixe constituant ledit premier axe. Dans cette forme de réalisation, le frein comprend encore avantageusement un ressort de compression, logé dans la partie allongée du patin, ressort dont une extrémité est appuyée à l'intérieur du patin, et dont l'autre extrémité est appuyée sur le premier axe, qui est ici un axe fixe. Le ressort de compression maintient le patin éloigné de la roue et du pneu, lorsque le frein est en position desserrée.

Selon une deuxième forme de réalisation de l'invention, le premier axe précité est un axe mobile, solidaire du patin et engagé, de façon pivotante et coulissante, dans une lumière ou rainure de guidage longitudinale formée dans le corps du frein. Dans cette autre forme de réalisation, le frein comprend encore avantageusement un ressort de traction, tendu entre le premier axe, solidaire du patin, et un point fixe du corps du frein. Le patin est donc rappelé ici en position desserrée par un ressort de traction, au lieu d'un ressort de compression.

Ainsi, le frein d'immobilisation selon l'invention ne comporte qu'un petit nombre de pièces, à savoir : un corps avec ses moyens de fixation sur son support, un levier de commande, un patin qui est la pièce agissant par appui sur la périphérie du pneu, et un ressort de rappel. Le mouvement de rotation du levier de commande entraîne un mouvement combiné de pivotement et de coulissement du patin qui va, selon le sens de pivotement du levier, s'éloigner de la périphérie du pneu ou au contraire se rapprocher de cette périphérie. En particulier, en passant d'une position angulaire particulière à une autre, le levier de commande force le patin à s'enfoncer radialement dans le pneu, le frein étant bloqué en position de serrage dès que le "point mort" est dépassé.

Quel que soit le mode d'exécution du frein, l'axe de rotation et de coulissement du frein se trouve toujours au niveau de la surface de contact entre le pneu et le patin, lorsque le frein est en position serrée. Ainsi, tout effort tendant à faire avancer ou reculer le véhicule concerné, tel que fauteuil roulant, passe nécessairement par cet axe et ne provoque aucun couple qui pourrait faire franchir à l'axe mobile le "point mort" dans le sens du desserrage du frein. Ainsi, le frein d'immobilisation selon l'invention est particulièrement stable en position serrée ; il résiste à des efforts importants et de toutes directions, et en particulier aux chocs que pourrait recevoir le fauteuil roulant.

Grâce à son ressort de rappel (ressort de compression ou de traction selon la forme de réalisation), qui tend à éloigner le patin du pneu, le frein d'immobilisation selon l'invention est stable aussi en position desserrée.

De plus, le mouvement du levier de commande permet de dégager suffisamment le patin de la roue pour qu'en position desserrée, le doigt d'une personne ne puisse pas se coincer entre le patin et la roue, ce qui entraînerait des blessures au doigt.

De toute façon, l'invention sera mieux comprise à l'aide de la description qui suit, en référence au dessin schématique annexé représentant, à titre d'exemples, deux formes d'exécution de ce frein d'immobilisation pour véhicules munis de roues à pneus souples :
Figure 1 est une vue de côté d'un frein d'immobilisation conforme à la présente invention, dans une première forme d'exécution, le frein étant ici représenté en position desserrée ;
Figure 2 est une vue de côté similaire à la figure 1, mais montrant ce frein en position serrée ;
Figure 3 est une vue en coupe longitudinale du même frein, suivant III-III de figure 2 ;
Figure 4 en est une vue en coupe transversale, suivant IV-IV de figure 2 ;
Figure 5 est une vue de côté d'un frein d'immobilisation conforme à la présente invention, dans une seconde forme d'exécution, le frein étant ici représenté en position desserrée ;
Figure 6 est une vue de côté similaire à la figure 5, mais montrant ce frein en position serrée ;
Figure 7 est une vue en coupe longitudinale du même frein, suivant VII-VII de figure 6;
Figure 8 en est une vue en coupe transversale, suivant VIII-VIII de figure 6.

Le frein d'immobilisation représenté au dessin est associé à une roue 1 équipée d'un pneu souple 2, appartenant à un fauteuil roulant pour handicapé. Ce frein comporte un corps 3a, fixé par un moyen connu, tel qu'un demi-collier 4 serré par une vis 5, sur un tube 6 appartenant au châssis du fauteuil roulant.

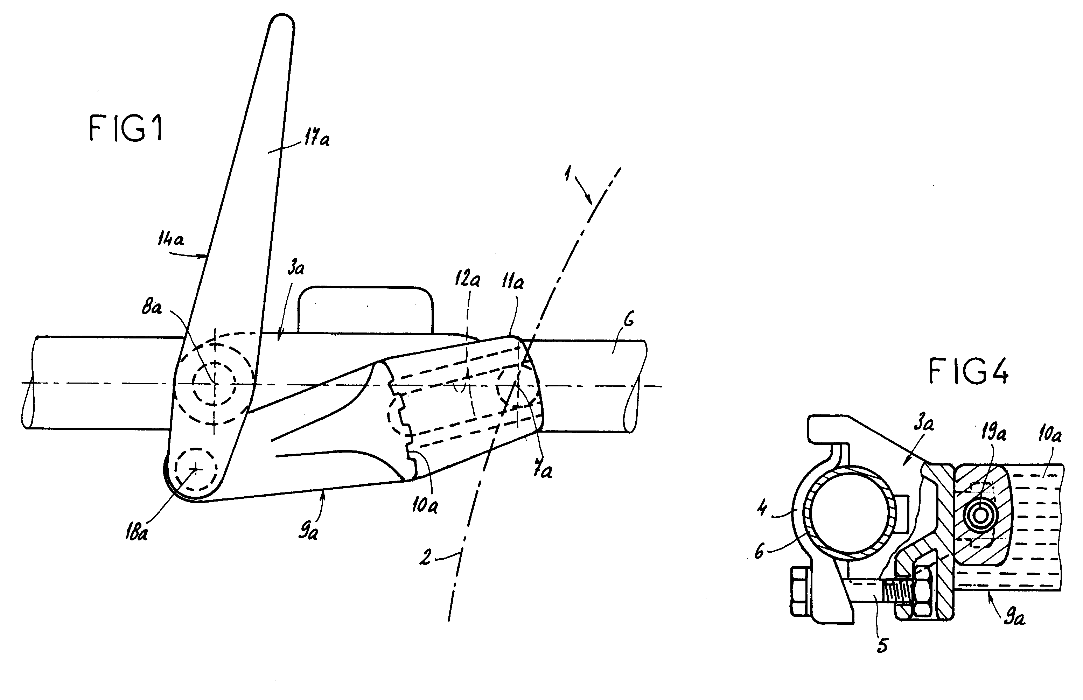

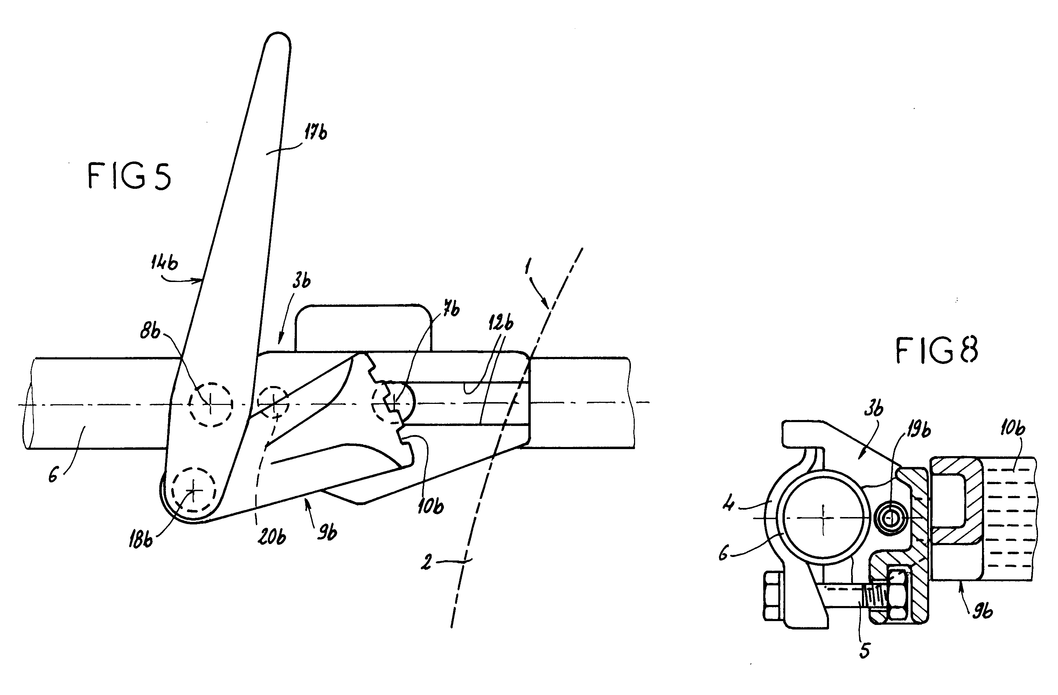

Dans la première forme d'exécution représentée aux figures 1 à 4, le corps 3a du frein comporte, ou forme lui-même, deux axes fixes 7a et 8a parallèles entre eux, séparés par une certaine distance, le premier axe 7a passant par la périphérie du pneu 2, et le second axe 8a en étant relativement éloigné.

Le frein comprend un patin 9a, pourvu d'une partie active crantée 10a et d'une partie allongée de guidage 11a, dans laquelle est ménagée une rainure de guidage 12a longitudinale ayant une section en forme de "T".

Le premier axe fixe 7a prend place dans la rainure de guidage 12a du patin 9a, cet axe 7a étant muni d'une tête 13a maintenant le patin 9a contre le corps 3a.

Un levier de commande 14a est monté pivotant autour du second axe fixe 8a, de préférence avec interposition d'une bague anti-friction 15, une vis 16 assurant la retenue du levier 14a sur le corps 3a. Un premier bras 17a du levier 14a forme une poignée de manoeuvre. L'autre bras du levier 14a, opposé au précédent, est articulé par son extrémité, autour d'un axe mobile 18a (parallèle aux axes fixes 7a et 8a), à l'extrémité de la partie allongée 11a du patin 9a éloignée du pneu 2.

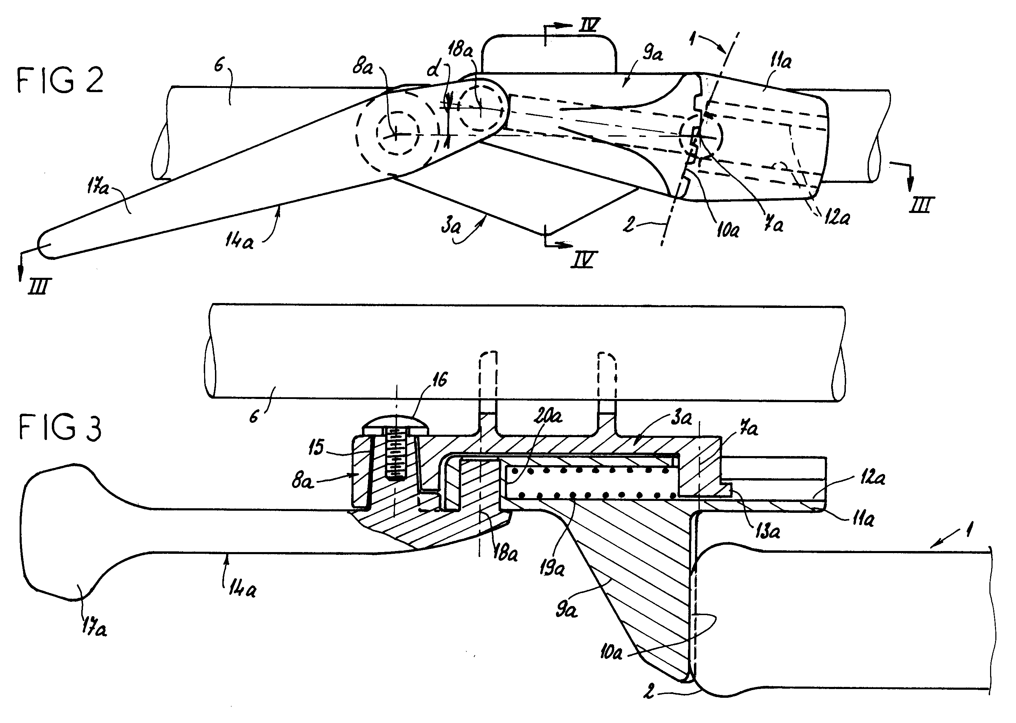

Un ressort de compression 19a, logé dans la partie allongée 11a du patin 9a, est appuyé par une extrémité à l'intérieur de ce patin 9a, en un point 20a situé près de l'axe mobile 18a, et est appuyé par son autre extrémité sur le premier axe fixe 7a - voir les figures 2 et 3.

Dans la position desserrée du frein (figure 1), le ressort de compression 19a maintient la partie active 10a du patin 9a éloignée de la périphérie du pneu 2.

Dans la position serrée du frein (figures 2 et 3), la partie active 10a du patin 9a comprime le pneu 2 à sa périphérie. Comme l'axe mobile 18a a alors dépassé d'une distance d la ligne reliant les deux axes fixes 7a et 8a, on voit que cette position du frein est très stable, le frein ne pouvant être débloqué que par manoeuvre volontaire du levier de commande 14a.

Le passage de la position serrée à la position deserrée, ou vice-versa, s'effectue en faisant pivoter le levier de commande 14a autour de l'axe fixe 8a, ce mouvement de pivotement s'accompagnant d'un mouvement combiné de pivotement et coulissement du patin 9a relativement à l'axe fixe 7a, avec franchissement d'un "point mort" défini par l'alignement de l'axe mobile 18a avec les deux axes fixes 7a et 8a.

Dans la seconde forme d'exécution, représentée aux figures 5 à 8, le corps 3b du frein comporte, ou forme lui-même, un seul axe fixe 8b autour duquel est monté pivotant le levier de commande 14b. Un bras de ce levier 14b est ici encore articulé, par l'intermédiaire d'un axe mobile 18b (parallèle à l'axe fixe 8b), à un patin de frein 9b pourvu d'une partie active crantée 10b.

Le corps 3b du frein présente ici, dans sa partie la plus proche de la roue 1, une lumière de guidage longitudinale 12b. Le patin 9b est pourvu, au niveau de sa partie active 10b, d'un axe 7b (parallèle aux axes 8b et 18b précités) qui est engagé dans la lumière longitudinale 12b du corps 3b. L'axe 7b est muni d'une tête 13b qui maintient le patin 9b contre le corps 3b.

Un ressort de traction 19b est accroché, par une extrémité, à la tête 13b de l'axe 7b solidaire du patin 9b. L'autre extrémité du ressort de traction 19b est accrochée sur un petit axe 20b porté par le corps 3b, dans sa partie éloignée de la roue 1.

En position desserrée (figure 5), le ressort de traction 19b agit sur le patin 9b de manière à maintenir sa partie active 10b éloignée de la périphérie du pneu 2, l'axe 7b prenant alors place à l'extrémité de la lumière 12b la plus éloignée de la roue 1.

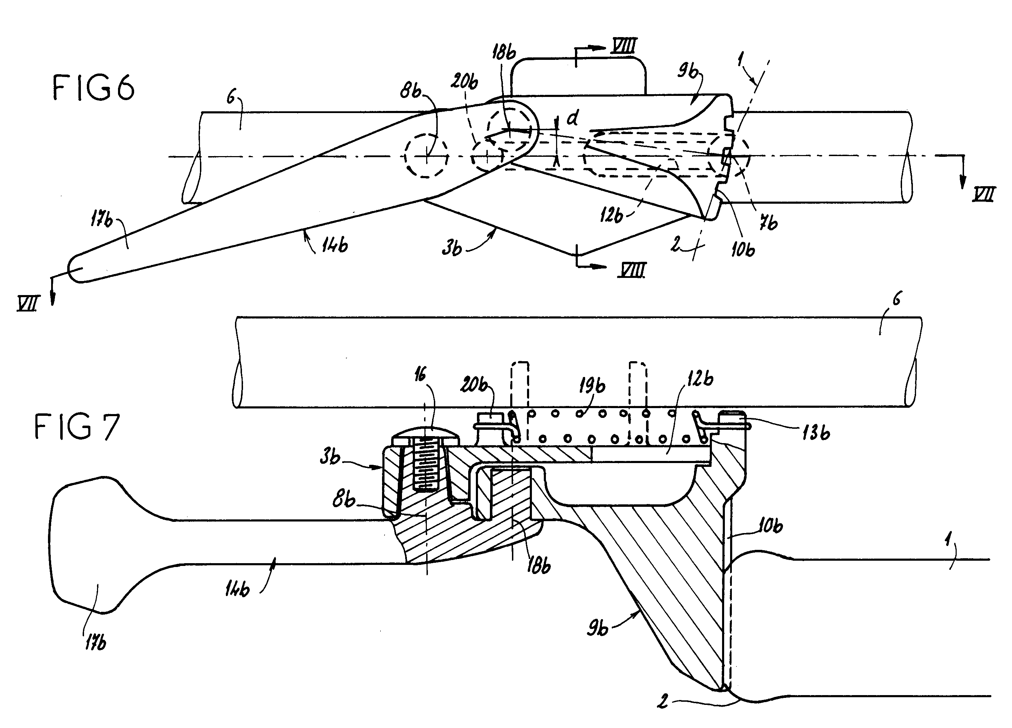

Comme précédemment, le passage vers la position serrée (figure 6 et 7) s'effectue par pivotement du levier de commande 14b, manoeuvré par son bras 17b, avec franchissement d'un "point mort" et dépassement de celui-ci d'une distance d. Le mouvement de pivotement du levier 14b s'accompagne ici d'un mouvement combiné de coulissement et de pivotement de l'axe 7b du patin 9b dans la lumière de guidage 12b formée dans le corps 3b, le patin 9b se rapprochant de la périphérie du pneu 2 pour venir, finalement, comprimer cette dernière.

Quelle que soit la forme d'exécution, l'axe de rotation et de coulissement 7a ou 7b du patin 9a ou 9b se trouve toujours au niveau du contact entre le pneu 2 et ce patin 9a ou 9b, lorsque le frein est en position serrée. Ainsi, tout effort tendant à faire avancer ou reculer le fauteuil roulant, donc à faire tourner la roue 1 dans un sens ou dans l'autre, passe par l'axe de pivotement 7a ou 7b du patin 9a ou 9b et ne provoque, par conséquent, aucun couple qui risquerait de faire franchir à l'axe mobile 18a ou 18b le "point mort" (ligne ou plan reliant les deux axes 7a et 8a, ou 7b et 8b).

Dans l'ensemble, on obtient ainsi un frein d'immobilisation composé d'un nombre très réduit de pièces, donc d'un prix de revient et d'un poids réduits, mais possédant une efficacité remarquable, notamment du point de vue de la sécurité au sens de la retenue du fauteuil roulant sur une pente qui l'entraînerait vers l'avant ou l'arrière, et de la stabilité aux chocs. La plupart des mouvements du mécanisme du frein étant des mouvements de rotation, son fonctionnement est particulièrement doux, et sa durée de vie est très longue. Le mouvement de la poignée de manoeuvre 17a ou 17b du frein est parfaitement ergonomique, et l'esthétique de ce frein est agréable. L'espace entre le pneu 2 et le patin 9a ou 9b, en position desserrée, est assez grand pour qu'un doigt ne puisse pas se blesser dans cet espace, et plus généralement aucune partie du frein n'est agressive, ce qui est un facteur de sécurité important.

Bien que ce frein d'immobilisation ait été décrit dans le cadre de son application à un fauteuil roulant pour handicapé, cette application n'est nullement limitative et le même frein d'immobilisation peut être utilisé, en bénéficiant des mêmes avantages, sur d'autres véhicules munis de roues à pneus souples, tels que des chariots de manutention, des voitures d'enfants, etc...

Comme il va de soi, et comme il ressort de ce qui précède, l'invention ne se limite pas aux seules formes d'exécution de ce frein d'immobilisation qui ont été décrites ci-dessus, à titre d'exemples ; elle en embrasse, au contraire, toutes les variantes de réalisation et d'application respectant le même principe. C'est ainsi, notamment, que l'on ne s'éloignerait pas du cadre de l'invention par des modifications de détail concernant les formes extérieures du corps et du patin du frein, ou la réalisation pratique des différents axes et de la lumière ou rainure de guidage, cette dernière étant d'ailleurs remplaçable par tout moyen équivalent de guidage en coulissement. Dans le même ordre d'idées, selon l'utilisation envisagée pour ce frein, la partie active du patin, qui entre en contact avec le pneu, peut posséder soit des crans (comme représenté au dessin) pour éviter totalement les glissements et réaliser un blocage immédiat, soit être plus ou moins lisse pour permettre un freinage progressif avant immobilisation.

## Revendications

1. Frein d'immobilisation pour véhicules munis de roues à pneus souples, du type roue de bicyclette, notamment pour fauteuils roulants pour handicapés, le frein comportant un patin (9a,9b) avec partie active (10a,10b) déplaçable entre une position enfoncée radialement dans le pneu (2) et une position éloignée du pneu (2), sous l'action d'un organe de commande (14a,14b), caractérisé en ce que le patin (9a,9b) est monté pivotant et coulissant relativement à un corps fixe (3a,3b), par un premier axe (7a,7b) coopérant avec un moyen de guidage linéaire (12a,12b), tandis que l'organe de commande est conformé en levier de commande (14a,14b), monté pivotant sur le corps fixe (3a,3b) autour d'un second axe (8a,8b) fixe et parallèle au premier axe (7a,7b), levier dont un premier bras (17a,17b) forme une poignée de manoeuvre et dont un deuxième bras est articulé, autour d'un axe mobile (18a,18b), à une partie du patin (9a,9b) éloignée de sa partie active (10a,10b), le mouvement de commande comportant le franchissement d'un "point mort" correspondant à l'alignement des trois axes (7a,8a,18a ; 7b,8b,18b), tandis qu'au moins dans la position serrée du frein, le premier axe (7a,7b), suivant lequel le patin (9a,9b) est monté pivotant et coulissant, passe sensiblement par la surface de contact de la partie active (10a,10b) du patin avec le pneu (2).

2. Frein d'immobilisation selon la revendication 1, caractérisé en ce que le premier axe (7a) est un axe fixe, solidaire du corps (3a) du frein, et en ce que le patin (9a) possède une partie de guidage (lla) allongée, dans laquelle est ménagée une lumière ou rainure de guidage (12a) longitudinale dans laquelle est engagé de façon pivotante et coulissante l'axe fixe (7a) constituant ledit premier axe.

3. Frein d'immobilisation selon la revendication 2, caractérisé en ce qu'il comprend encore un ressort de compression (19a), logé dans la partie allongée (11a) du patin (3a), ressort dont une extrémité est appuyée (en 20a) à l'intérieur du patin (9a), et dont l'autre extrémité est appuyée sur le premier axe fixe (7a).

4. Frein d'immobilisation selon la revendication 1, caractérisé en ce que le premier axe (7b) est un axe mobile, solidaire du patin (9b) et engagé, de façon pivotante et coulissante, dans une lumière ou rainure de guidage (12b) longitudinale formée dans le corps (3b) du frein.

5. Frein d'immobilisation selon la revendication 4, caractérisé en ce qu'il comprend encore un ressort de traction (19b), tendu entre le premier axe (7b), solidaire du patin (9b), et un point fixe (20b) du corps (3b) du frein.

6. Frein d'immobilisation selon la revendication 2 ou 4, caractérisé en ce que le premier axe, fixe (7a) ou mobile (7b), est muni d'une tête (13a,13b) qui maintient le patin (9a,9b) contre le corps (3a,3b) du frein.
